# EUROPEAN PATENT APPLICATION

(11) **EP 4 686 646 A1**
(43) Date of publication of application: **04.02.2026**
(21) Application number: 25191148.3
(22) Date of filing: 23.07.2025
(51) Int. Cl.: B63B 1/22, B63B 39/06, B63B 39/14, B63H 25/00, B63H 25/02, B63H 25/44, G05G 5/00, G05G 9/00, G06F 3/01, G06F 3/048

(54) **TRIM TAB ACTUATOR INPUT DEVICE**

(30) Priority: 01.08.2024 US 202418791526
(71) Applicant: Navico Group Americas LLC, Menomonee Falls, WI 53051 (US)
(72) Inventor: HANEY, Trevor R., Jenison, MI, 49428 (US); DOWNEY, Kevin T., Rockford, MI, 49341 (US)
(74) Representative: Von Rohr Patentanwälte Partnerschaft mbB

(57) **Abstract**

A trim tab actuator input device (20, 1300, 1500) for a marine vessel includes a trim tab movement selector (90, 1310, 1410) that, when selected for a first trim tab, sends a signal to move the first trim tab to effectuate a first roll movement of the marine vessel. When selected for a second trim tab, the selector (90, 1310, 1410) sends a signal to move the second trim tab to effectuate a second roll movement of the marine vessel. Selection of a state-changing input element (22, 102, 1306) changes the trim tab actuator input device between first and second states. When the trim tab actuator input device is in the first state, a display (102, 104, 104-1, 104-2, 106-1, 106-2, 1302) indicates the first position of the first trim tab and/or the second position of the second trim tab. When the trim tab actuator input device (20, 1300, 1500) is in the second state, the display (102, 104, 104-1, 104-2, 106-1, 106-2, 1302) indicates the first roll movement and/or the second roll movement of the marine vessel.

## Description

### FIELD

The present disclosure relates to a trim tab actuator input device for controlling trim tabs on a marine vessel.

### BACKGROUND

U.S. Patent No. 6,354,237 discloses a trim tab control system in which four buttons or switches are provided for the marine operator in which the operator can select to raise the bow, raise the stern, raise the port side of the boat, or raise the stern side of the boat in relative terms, and the system will automatically position the trim tabs to most efficiently achieve the operator's demanded change in position of the marine vessel.

U.S. Patent Application No. 17/716,542 discloses an electric linear actuator that has a housing extending along a longitudinal axis. A spindle is provided in the housing and extends along the longitudinal axis. A rod is coaxially coupled to the spindle and extends from a proximal end located in the housing to a distal end located outside the housing. The rod is movable along the longitudinal axis in response to rotation of the spindle. A circuit board is located in the housing adjacent the proximal end of the rod. The circuit board includes a linear inductive sensor having a linear axis oriented parallel to the longitudinal axis. The linear inductive sensor senses an actual position of the proximal end of the rod.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

In non-limiting examples, a trim tab actuator input device for a marine vessel is disclosed herein. The trim tab actuator input device may include a trim tab movement selector that, when selected for a first trim tab, sends a signal to move the first trim tab to effectuate a first roll movement of the marine vessel. When selected for a second trim tab, the selector sends a signal to move the second trim tab to effectuate a second roll movement of the marine vessel. Selection of a state-changing input element changes the trim tab actuator input device between first and second states. When the trim tab actuator input device is in the first state, a display indicates the first position of the first trim tab and/or the second position of the second trim tab. When the trim tab actuator input device is in the second state, the display indicates the first roll movement and/or the second roll movement of the marine vessel.

In another exemplary device, the trim tab movement selector comprises a rotating element, wherein rotating the rotating element in a clockwise direction sends the first signal to the first actuator of the first trim tab, and wherein rotating the rotating element in a counter-clockwise direction sends the second signal to the second actuator of the second trim tab.

In another exemplary device, the rotating element comprises a dial.

In another exemplary device, the display further comprises an indicator of whether the trim tab actuator input device is in a state selected from a group consisting of the first state and the second state.

In another exemplary device, the display further comprises a plurality of radially oriented indicators, wherein when the trim tab actuator input device is in the second state, rotating the rotating element causes the display to illuminate the radially oriented indicators in accordance with a direction in which the rotating element is rotated, and wherein when the trim tab actuator input device is in the first state, rotating the rotating element causes the display to illuminate the radially oriented indicators in accordance with a direction opposite that in which the rotating element is rotated.

In another exemplary device, the radially oriented indicators comprise a plurality of radially oriented tick marks and a plurality of light emitting diodes.

In another exemplary device, rotating the rotating element in the opposite direction of the direction, after rotating the rotating element in the direction, causes the display to stop illuminating one or more illuminated, radially oriented indicators in accordance with the opposite direction and the magnitude to which the rotating element is rotated.

In another exemplary device, the first position corresponds with a magnitude to which the rotating element is rotated in the clockwise direction, and the second position corresponds with a magnitude to which the rotating element is rotated in the counter-clockwise direction.

In another exemplary device, the display comprises a plurality of radially oriented tick marks, wherein rotating the rotating element causes the display to illuminate the radially oriented tick marks in accordance with a direction in which the rotating element is rotated and the magnitude to which the rotating element is rotated.

In another exemplary device, the trim tab actuator input device further comprises a plurality of keys, wherein the state-changing input element comprises the plurality of keys.

In another exemplary device, selecting the state-changing input element comprises holding the plurality of keys for a predetermined amount of time.

In another exemplary device, the display displays a graphical user interface (GUI), wherein the GUI comprises the state-changing input element.

In another exemplary device, the GUI comprises an indicator of whether the trim tab actuator input device is in a state selected from a group consisting of the first state and the second state.

In another exemplary device, the indicator comprises the term, trim tab, when the trim tab actuator input device is in the first state, and the word, boat, when the trim tab actuator input device is in the second state.

In another exemplary device, the GUI comprises the trim tab movement selector.

In non-limiting examples, a trim tab actuator input device for a marine vessel is disclosed herein. The trim tab actuator input device may include a trim tab movement selector that, when selected for a first trim tab of the marine vessel, sends a first signal to a first actuator of the first trim tab of the marine vessel, wherein the first signal indicates a first position to which the first actuator is to move the first trim tab to effectuate a first roll movement of the marine vessel. Additionally, when the trim tab movement selector is selected for a second trim tab of the marine vessel, sends a second signal to a second actuator of the second trim tab of the marine vessel, wherein the second signal indicates a second position to which the second actuator is to move the second trim tab to effectuate a second roll movement of the marine vessel. Additionally, the device includes a state-changing input element, wherein selecting the state-changing input element when the trim tab actuator input device is in a first state, changes the trim tab actuator input device to be in a second state. Further, when the trim tab actuator input device is in the second state, changes the trim tab actuator input device to be in the first state. Further, the trim tab actuator input device includes a display that indicates whether the trim tab actuator input device is in a state selected from a group consisting of the first state and the second state, wherein when the trim tab actuator input device is in the first state, the display indicates the first position of the first trim tab and/or the second position of the second trim tab, and wherein when the trim tab actuator input device is in the second state, the display indicates the first roll movement of the marine vessel and/or the second roll movement of the marine vessel.

In another exemplary device, the trim tab movement selector comprises a rotating dial, and wherein rotating the rotating dial in a clockwise direction sends the first signal to the first actuator of the first trim tab, and wherein rotating the rotating dial in a counter-clockwise direction sends the second signal to the second actuator of the second trim tab.

In another exemplary device, the trim tab actuator input device further comprises a plurality of keys, wherein the state-changing input element comprises the plurality of keys, and wherein selecting the state-changing input element comprises holding the plurality of keys for a predetermined amount of time.

In another exemplary device, the display displays a graphical user interface (GUI), wherein the GUI comprises the state-changing input element, and wherein the GUI comprises an indicator of whether the trim tab actuator input device is in the state selected from the group consisting of the first state and the second state.

In another exemplary device, the indicator comprises the term, actuator, when the trim tab actuator input device is in the first state, and the indicator comprises the word, vessel, when the trim tab actuator input device is in the second state.

### BRIEF DESCRIPTION OF THE DRAWINGS

The present disclosure is described with reference to the following Figures. The same numbers are used throughout the Figures to reference like features and like components.
- Fig. 1A: is a perspective view of an example trim tab actuator input device and a control system according to the present disclosure.
- Fig. 1B: is a top view of example trim tab displays according to the present disclosure.
- Fig. 2: is an exploded view depicting certain components of the example trim tab actuator input device of Fig. 1 according to the present disclosure.
- Figs. 3-4: are perspective views of an example dial frame according to the present disclosure.
- Figs. 5-6: are perspective views of an example trim tab movement selector according to the present disclosure.
- Fig. 7: illustrates two top views of the example trim tab actuator input device according to the present disclosure when operating in a given state.
- Fig. 8: illustrates two top views of the example trim tab actuator input device according to the present disclosure when operating in a state other than the given state of Fig. 7.
- Fig. 9: is an internal perspective view of the example trim tab actuator input device according to the present disclosure.
- Fig. 10: is an internal perspective view of the example trim tab actuator input device according to the present disclosure.
- Fig. 11: is a cross-sectional side view of the example trim tab actuator input device according to the present disclosure, taken along the line 11-11 of Fig. 1.
- Fig. 12: is a perspective view of an example circuit board according to the present disclosure.
- Fig. 13: is a diagram of an example trim tab actuator input device according to the present disclosure.
- Fig. 14A: is a diagram of an example graphical user interface for the example trim tab actuator input device according to the present disclosure.
- Fig. 14B: is a diagram of another example graphical user interface for the example trim tab actuator input device according to the present disclosure.
- Fig. 15: is a diagram of an example trim tab actuator input device according to the present disclosure.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items.

Unless otherwise specified or limited, the phrases "at least one of A, B, and C," "one or more of A, B, and C," and the like, are meant to indicate A, or B, or C, or any combination of A, B, and/or C, including combinations with multiple instances of A, B, and/or C. Likewise, unless otherwise specified or limited, the terms "mounted," "connected," "linked," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

As used herein, unless otherwise limited or defined, discussion of particular directions is provided by example only, with regard to particular embodiments or relevant illustrations. For example, discussion of "top," "bottom," "front," "back," "left," "right," "lateral" or "longitudinal" features is generally intended as a description only of the orientation of such features relative to a reference frame of a particular example or illustration. Correspondingly, for example, a "top" feature may sometimes be disposed below a "bottom" feature (and so on), in some arrangements or embodiments. Additionally, use of the words "first," "second", "third," etc. is not intended to connote priority or importance, but merely to distinguish one of several similar elements from another.

A trim tab actuator input device, i.e., a trim tab control, typically has an input mechanism that an operator may use to extend and retract the rod(s) of one or more trim tab actuators so as to change the positioning of one or more trim tabs of a marine vessel. For example, a trim tab control may include a rotating dial. As such, the operator may turn the dial clockwise or counter-clockwise to extend and retract the starboard and port side actuators and/or trim tabs, respectively. In this way, the operator may adjust the roll of the boat in the port and starboard directions, respectively. Further, the trim tab control can include a display that shows a representation of the extension (i.e., travel, or position) of the actuators and/or trim tabs. This representation may appear as a series of marks. A lesser number of marks may indicate a lesser amount of extension, and a greater number of marks may show a greater amount of extension.

For example, in response to the operator rotating the trim tab control clockwise, the display may provide an indicator, or image, on the starboard (i.e., right) side of the trim tab control display, showing a series of marks indicating how far the actuator and/or trim tab on the starboard side of the boat is extended. Similarly, in response to the operator rotating the trim tab control counter-clockwise, this display may provide an indicator on the port (i.e., left) side of the trim tab control, showing a series of marks indicating how far the actuator and/or trim tab on the port side of the boat is extended. In these ways, the display is providing a representation of the trim tab positioning corresponding to the port or starboard side location of the trim tabs.

However, extending an actuator and/or trim tab can cause a roll movement of the marine vessel in an opposite direction from the location of the extended trim tab. For example, extending the port side trim tab can cause the marine vessel to roll towards the starboard direction. Similarly, extending the starboard side trim tab can cause the marine vessel to roll towards the port direction. As such, the operator of the trim tab control may be disoriented by the conflict between a display showing movement of the actuator or trim tab in one direction, while the marine vessel rolls towards the opposite direction. Further, having the vessel move in a different direction than the operator expects could cause a hazard, such as a collision with another vessel or person. While it may be possible to configure a trim tab control such that its display shows movement corresponding to the roll of the marine vessel, an experienced operator (accustomed to a traditional trim tab control display that indicates on which side the actuator and/or trim tab is being moved) may roll the marine vessel in a different direction than expected, and also potentially cause hazards.

The present inventors developed the trim tab control of the present disclosure to be novel and include advantageous features relative to conventional trim tab controls. For example, as will be described in greater detail herein below, a trim tab control may include a display perspective selector. The display perspective selector may provide the ability to switch the representative display of an actuator and/or trim tab movement between two different states. In a first state, e.g., a traditional or actuator perspective state, the trim tab control display may indicate the side of the vessel on which the actuator and/or trim tabs are moving in response to the operation of the trim tab control. In a second state, e.g., a vessel perspective state, the trim tab control display may indicate the direction of the roll of the marine vessel resulting from the trim tab movement. Further, the trim tab control display may include an indicator of the display perspective, enabling the operator to determine the current display perspective. In these ways, a vessel operator may determine the current display perspective, and select a display perspective that matches the operator's expectations for how the trim tab control display represents the operation of the trim tab control. These example novel and non-obvious features of the trim tab control of the present disclosure (along with other features and/or components) are described in greater detail therein below.

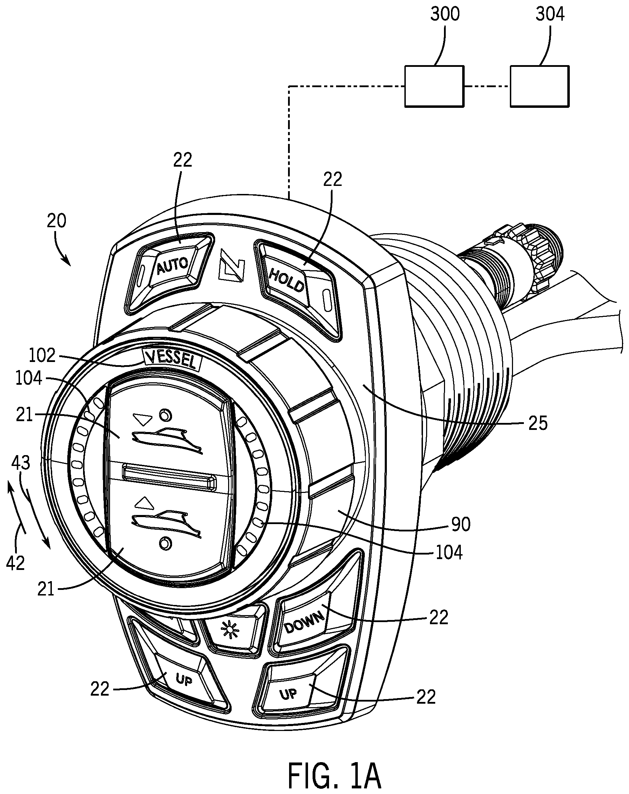

Fig. 1A is a perspective view of an example trim tab actuator input device 20 and a control system 300 of a marine vessel according to the present disclosure. The trim tab actuator input device 20 includes trim bow buttons 21, auxiliary buttons 22, flexible cover 25, trim tab movement selector 90, perspective indicator 102, and trim tab display 104. Additionally, the trim tab actuator input device 20 may include a sensor (not shown) that detects one or more inputs from the operator of the marine vessel to the trim tab actuator input device 20. Further, the trim tab actuator input device 20 may provide a signal representing the detected input(s) to the control system 300, which may use the provided signal to determine how to control one or more components or systems of the marine vessel. For example, as shown herein, the control system 300 may be operatively connected to first and second trim tab actuators 304, which may be, for example, electric or hydraulic linear actuators, as known in the art.

For example, one method of providing inputs may involve the operator engaging (e.g., depressing, touching) the trim bow buttons 21 in order to trim the bow of the marine vessel up and/or down. The trim direction may be represented by the arrow indicator on the trim bow button 21. Accordingly, in response to an operator depressing the trim bow button 21 with the down arrow indicator, the trim tab actuator input device 20 may send a signal to the control system 300 indicating a request to trim down the bow of the marine vessel. Conversely, in response to an operator depressing the trim bow button 21 with the up arrow indicator, the trim tab actuator input device 20 may send a signal to the control system 300 indicating a requested to trim up the bow of the marine vessel. In response to the signal, the control system 300 may thus control a trim actuator (not depicted) or trim tabs (not depicted) to trim up or trim down the marine vessel. Exemplary trim actuators and sensors are disclosed in U.S. Patent Nos. 6,583,728; 7,156,709; 7,416,456; 9,359,057; and 10,137,971, which are incorporated by reference in entirety herein.

In another example, the operator may rotate the trim tab movement selector 90 to position the actuators and/or trim tabs on the starboard and/or port sides of the marine vessel. More specifically, the operator may engage (e.g., using one or more fingers) the trim tab movement selector 90 to rotate the trim tab movement selector 90 in either a clockwise direction 42 or a counter-clockwise direction 43. In response to receiving signals corresponding to the detected inputs from the trim tab actuator input device 20, the control system 300 may position one or more actuators and/or trim tabs on the side of the marine vessel corresponding to the direction of rotation. For example, in response to the operator rotating the trim tab movement selector 90 in the clockwise direction 42, the trim tab actuator input device 20 may send a signal to the control system 300 to extend the actuators and/or trim tabs on the starboard side of the boat. Conversely, in response to the operator rotating the trim tab movement selector 90 in the counter-clockwise direction 43, the trim tab actuator input device 20 may send a signal to the control system 300 to extend the actuators and/or trim tabs on the port side of the boat.

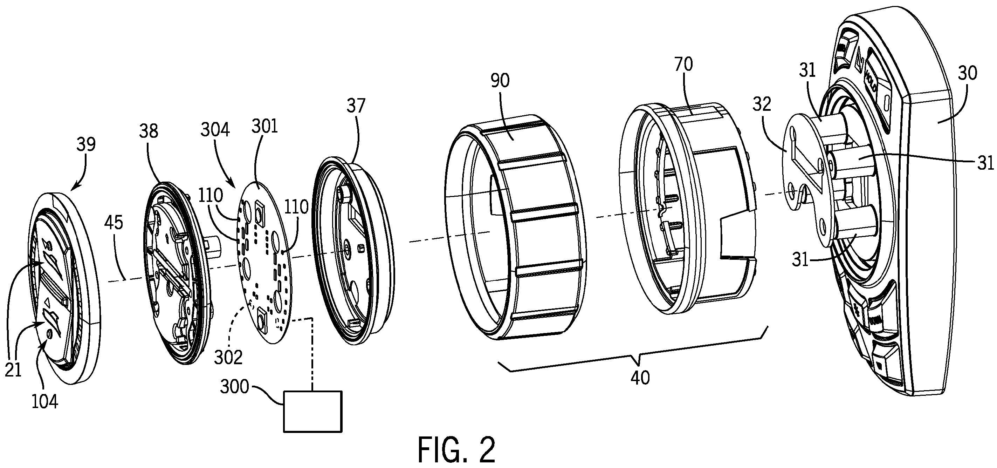

The functions of trimming the bow and rolling the marine vessel noted above are merely exemplary, and it should be understood that the trim tab actuator input device 20 of the present disclosure, including the interfaces, buttons, dials, and the like, thereof, can be adapted to receive inputs from the operator for operating other components or systems of the marine vessel (e.g., lighting, speakers, cooling systems, pumps). For example, the trim tab actuator input device 20 may also include one or more auxiliary buttons 22 for controlling other components or systems of the marine vessel, or customizing the manner in which the control system 300 controls these components and systems, such as increasing or decreasing the volume of speaker systems, adjusting light intensity, holding current settings, moving into a preset selection of controls, and the like. In one particular example, an auxiliary button 22 can be selected to operate the control system 300 in an auto-tab control mode. In addition to the trim tab movement selector 90 being used to control movements of the trim tabs, "UP and "DOWN" buttons 22 in the lower lefthand and lower righthand corners of the trim tab actuator input device 20 can be used to control the movements of the trim tabs in a manual mode. Further, the buttons 21, 22 may be formed by a frame (described with respect to Fig. 2) having one or more mechanical members (e.g., tabs, flanges, bosses). Additionally, electrical components (not depicted; e.g., switches, wires, sensors, magnets) are connected to the frame, and in communication with the buttons 21, 22. The frame may be mounted to the marine vessel. For example, the frame may be mounted on a sidewall or a console of the marine vessel.

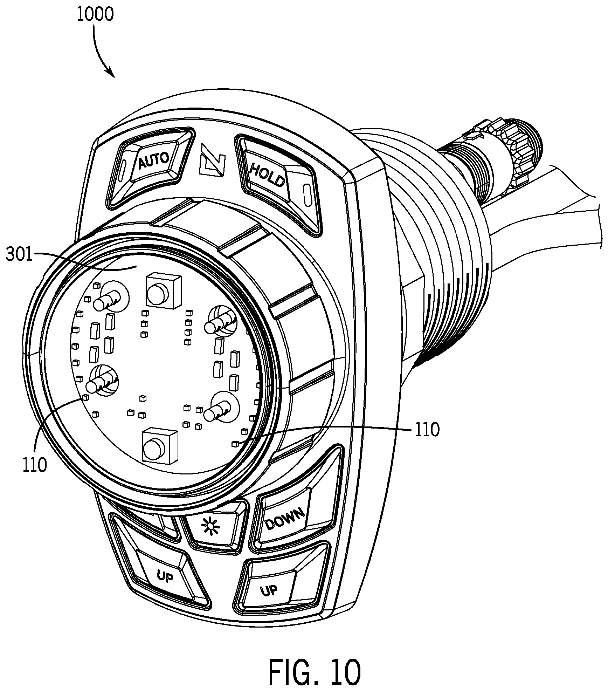

The trim tab display 104 may be a series of radially oriented indicators, such as tick marks, that illuminate to indicate the direction of the roll (when in the vessel perspective state), or the side of the marine vessel on which the actuators and/or trim tabs are moving (when in the actuator perspective state), in response to operation of the trim tab movement selector 90. More specifically, the trim tab actuator input device 20 may include a set of light-emitting diodes (LEDs, see 110, Fig. 10) that illuminate based on the perspective state and the rotation direction (and rotation magnitude) of the trim tab movement selector 90. Further, the illuminated LEDs may be visible through the radially oriented tick marks of the trim tab display 104. Note that the tick marks do not need to be radially oriented and could instead be oriented in other directions. Further, note that the trim tab display 104 is not limited to utilizing visually discrete marks, but could instead comprise an illumination scheme that is visually continuous, such as semi-circular rings of light. In still further examples, LEDs or other types of lights are not required, and instead a liquid crystal display shows the direction of vessel roll or the extension of the actuators.

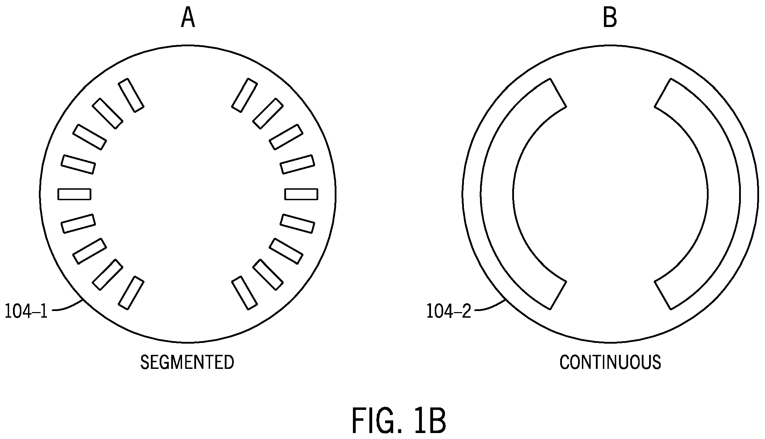

Additionally, the perspective indicator 102 can indicate the current display perspective. In the example of Fig. 1, the perspective indicator 102 indicates the vessel state with the display, "VESSEL." Conversely, when the trim tab actuator input device 20 is in an actuator perspective state, the perspective indicator 102 can display, "ACTUATOR." Additionally, the trim tab actuator input device 20 may include one or more state changing elements. The state changing element(s) may enable the operator to switch the display perspective between the vessel perspective state and the actuator perspective state. For example, in response to the operator engaging the state changing element(s), the trim tab actuator input device 20 may change the perspective indicator 102 from "VESSEL" to "ACTUATOR," and vice-versa. In one embodiment, the state changing elements may include a combination of two predetermined auxiliary buttons 22. Thus, in response to a simultaneous pressing of, for example, the "UP" and "DOWN" buttons on the lower righthand side of the trim tab actuator input device 20, the trim tab actuator input device 20 may change the display perspective from the vessel perspective state to the actuator perspective state, or vice-versa. Additionally, to avoid an inadvertent switch, the trim tab actuator input device 20 may impose a predetermined delay before switching the display perspective. For example, the trim tab actuator input device 20 may wait until the "UP" and "DOWN" buttons are simultaneously depressed for 3 seconds before the switch. In other examples, the trim tab actuator input device 20 may include different embodiments of the state changing element, such as a predetermined sequence of button selections, a separate state changing button or sensor, use of the perspective indicator 102 itself in a dual-purpose functionality, and the like. In general, if auxiliary buttons are used as the state changing element(s), the specific buttons chosen are ones that would typically not be pressed simultaneously during normal operation of the trim tab actuator input device 20. For example, it is unlikely that the operator will press both the "UP" and "DOWN" buttons 22 for the same trim tab at the same time, as these input commands contradict one another.

In the example of Fig. 1, the perspective indicator 102 indicates that the display perspective is the vessel perspective state. When the operator rotates the trim tab movement selector 90 in a clockwise direction, the control system 300 may control a port side actuator and/or trim tab extension, which causes the marine vessel to roll towards the starboard side. Thus, because the trim tab actuator input device 20 is in the vessel perspective state, when the operator rotates the trim tab movement selector 90 in the clockwise direction, the trim tab actuator input device 20 may illuminate sequentially, and in the clockwise direction, the LEDs corresponding to the radially oriented tick marks on the right (i.e., starboard) side of the trim tab display 104, in essence showing the boat rolling to starboard. Further, the number of illuminated LEDs may indicate the magnitude of the extension of the port side trim tab (and hence, the magnitude of the roll to starboard). Subsequently, in response to the operator rotating the trim tab movement selector 90 counter-clockwise (thus, retracting the actuator of the port side trim tab), the trim tab actuator input device 20 may turn off, sequentially, and in the counter-clockwise direction, the number of illuminated tick marks that correspond to the magnitude of the counter-clockwise rotation. In these ways, the trim tab display 104 represents the vessel perspective state, i.e., the direction of the roll of the marine vessel resulting from operation of the trim tab actuator input device 20.

It should be understood that the same description applies in reverse when the trim tab movement selector 90 is initially rotated in the counter-clockwise direction to extend the starboard side trim tab actuator and roll the vessel to port. That is, when the display perspective is the vessel perspective state, the trim tab actuator input device 20 may illuminate sequentially, and in the counter-clockwise direction, the LEDs corresponding to the radially oriented tick marks on the left (i.e., port) side of the trim tab display 104, in essence showing the boat rolling to port. Subsequently, in response to the operator rotating the trim tab movement selector 90 clockwise (thus, retracting the actuator of the starboard side trim tab), the trim tab actuator input device 20 may turn off, sequentially, and in the clockwise direction, the number of illuminated tick marks that correspond to the magnitude of the clockwise rotation. Conversely, when in an actuator perspective state, the perspective indicator 102 may display the word, "ACTUATOR." Thus, when the operator rotates the trim tab movement selector 90 in a counter-clockwise direction (initiating a starboard side trim tab extension and a roll to port), the trim tab actuator input device 20 may illuminate sequentially, and in the clockwise direction, the LEDs corresponding to the radially oriented tick marks on the right (i.e., starboard side) of the trim tab display 104, representing the movement of the starboard side trim tab extension. Further, the number of illuminated LEDs may indicate the magnitude of the starboard side trim tab extension. Subsequently, in response to the operator rotating the trim tab movement selector 104 in a clockwise direction (initiating a retraction of the starboard side trim tab), the trim tab actuator input device 20 may turn off, sequentially, and in the counter-clockwise direction, the number of illuminated tick marks that correspond to the magnitude of the rotation. In these ways, the trim tab display 104 represents the actuator perspective state, i.e., the side of the marine vessel on which the actuators and/or trim tabs are moving in response to the operation of the trim tab actuator input device 20. It should be understood that the same description applies in reverse when the trim tab movement selector 90 is initially rotated in the clockwise direction to extend the port side trim tab actuator and roll the vessel to starboard.

Additionally, the "UP" and "DOWN" buttons (of the auxiliary buttons 22) on the lower lefthand and righthand sides of the trim tab actuator input device 20 may cause similar functionalities as those resulting from rotation of the trim tab movement selector 90. More specifically, engaging the DOWN button on the lower lefthand side may cause functionality similar to a counter-clockwise rotation of the trim tab movement selector 90, i.e., a roll to port, resulting from extension of the starboard side trim tab actuator(s), and the corresponding LED illumination of the trim tab display 104, which is dependent upon the display perspective, as described above. Further, subsequent engagement of the UP button on the lower lefthand side may cause retraction of the starboard side trim tab actuator, and the corresponding de-illumination of the LEDs. Conversely, engaging the DOWN button on the lower righthand side may cause functionality similar to a clockwise rotation of the trim tab movement selector 90, i.e., a roll to starboard, resulting from extension of the port side trim tab actuator, and the corresponding LED illumination, which is dependent upon the display perspective.

Further, in an alternative embodiment, rotating the trim tab movement selector 90, or engaging the auxiliary buttons 22 located below the trim tab movement selector 90, may (in the actuator perspective state) cause movement of the trim tab actuator on the side of the marine vessel or may (in the vessel perspective state) cause roll to the side of the marine vessel corresponding to the direction of rotation (or, for engagement of the auxiliary buttons 22, corresponding to the side of the trim tab actuator input device 20 on which the engaged auxiliary button 22 is located).

Thus, in the vessel perspective state, a counter-clockwise rotation of the trim tab movement selector 90 (or engaging the lefthand side DOWN auxiliary button) may cause movement of the starboard side trim tab actuator and a resulting roll to port.

Accordingly, in the vessel perspective state, the trim tab actuator input device 20 may illuminate the LEDs on the lefthand side of the trim tab display 104, in a counter-clockwise direction. A subsequent clockwise rotation (or engaging the lefthand side UP auxiliary button) may cause the starboard side trim tab actuator to retract and turn off the illuminated LEDs in the clockwise direction. It should be understood that the same description applies in reverse when the trim tab movement selector 90 is initially rotated in the clockwise direction to extend the port side trim tab actuator and roll the vessel to starboard.

In this alternative embodiment, in the actuator perspective state, when the operator rotates the trim tab movement selector 90 in the clockwise direction (or engages the righthand side DOWN auxiliary button) this generates a signal to extend the starboard side trim tab actuator and causes a roll to port. Accordingly, the trim tab actuator input device 20 may illuminate the LEDs on the right side of the trim tab display 104, in a clockwise direction, representing extension of the starboard side actuator. A subsequent counter-clockwise rotation (or engagement of the righthand side UP auxiliary button) causes the starboard side trim tab actuator to retract and turns off the illuminated LEDs in the counter-clockwise direction. It should be understood that the same description applies in reverse when the trim tab movement selector 90 is initially rotated in the counter-clockwise direction to extend the port side trim tab actuator and roll the vessel to starboard. In this way, in the alternative embodiment, the operator's inputs to the trim tab movement selector 90 and/or auxiliary buttons 22 are interpreted as commands to extend or retract the actuators on the side of the vessel corresponding to the direction of rotation (or the side of the vessel on which the auxiliary button 22 was pressed).

The buttons 21, 22 may also include portions of a flexible cover 25 that covers the frame, thus mitigating the amount of debris and moisture that may damage the frame and related mechanical and electrical components. The cover 25 can be formed of any suitable material such as plastic or rubber, and the cover 25 can include indica (e.g., recesses, projections, letters, symbols) for indicating the location and function of the buttons 21, 22. Additionally, the cover 25 may include the trim tab display 104. More specifically, the cover 25 may be a molded rubber piece that is painted on its back side. In such an embodiment, the radially oriented tick marks of the trim tab display 104 may be located on the back side of the cover 25, resulting from laser etching away the paint in the pattern of these radially oriented tick marks. In this way, when the LED light for a radially oriented tick mark is not illuminated, the unilluminated tick marks may not be readily apparent. However, when an LED light is illuminated, the illumination may appear through the corresponding laser etched area of the tick mark.

Fig. 1B includes top views of example trim tab displays 104-1, 104-2 according to the present disclosure. The example trim tab displays 104-1, 104-2 may be similar to the trim tab display 104 described with respect to Fig. 1A. The example trim tab display 104-1 is a segmented display that may represent the magnitude of extension of the actuators 304 in separate radially oriented tick marks. Alternatively, the example trim tab display 104-2 is a continuous display that may reflect the magnitude of extension of the actuators 304 in the radial length of LED light. In other words, the lesser the extension is, the lesser the radial length of the illuminated light on the corresponding side of the display. Conversely, the greater the extension is, the greater the radial length of the illuminated light on the corresponding side of the display. It is noted that the trim tab displays 104, 104-1, 104-2 described herein are merely non-limiting examples. It is possible to represent the trim tab actuator positions, and associated functionality, in various manners consistent with the descriptions herein.

Fig. 2 is an exploded view depicting certain components of the example trim tab actuator input device 20 of Fig. 1 according to the present disclosure. The trim tab actuator input device 20 includes a button assembly 39, button frame 38, sensor assembly 304, housing 37, dial assembly 40, subframe 32, and frame 30. The frame 30 includes axially extending threaded bosses 31, which are connected to the subframe 32. The subframe 32 and the bosses 31 are axially fixed to the frame 30 and do not rotate relative to the frame 30. A housing 37 is coupled to the subframe 32 with fasteners, e.g., bolts, screws (not depicted), that extend into the bosses 31. The button frame 38 is coupled to the housing 37, and the button assembly 39 having one or more buttons 21 (and trim tab display 104) is coupled to the button frame 38. The button frame 38, the button assembly 39, and the buttons 21 are axially fixed in place relative to each other and do not rotate. The dial assembly 40 includes the trim tab movement selector 90 and dial frame 70, which are keyed to one another and rotate together about the dial axis 45. The trim tab movement selector 90 may be a dial ring that interlocks with the dial frame 70. Further, the sensor assembly 304 may include a sensor 302 (e.g., Hall-Effect sensor) for sensing movement (e.g., rotation) of the dial assembly 40. The sensor 302, shown in phantom, may be mounted on an opposite side of a circuit board 301 (e.g., printed circuit board), which may also support the above-mentioned LEDs 110.

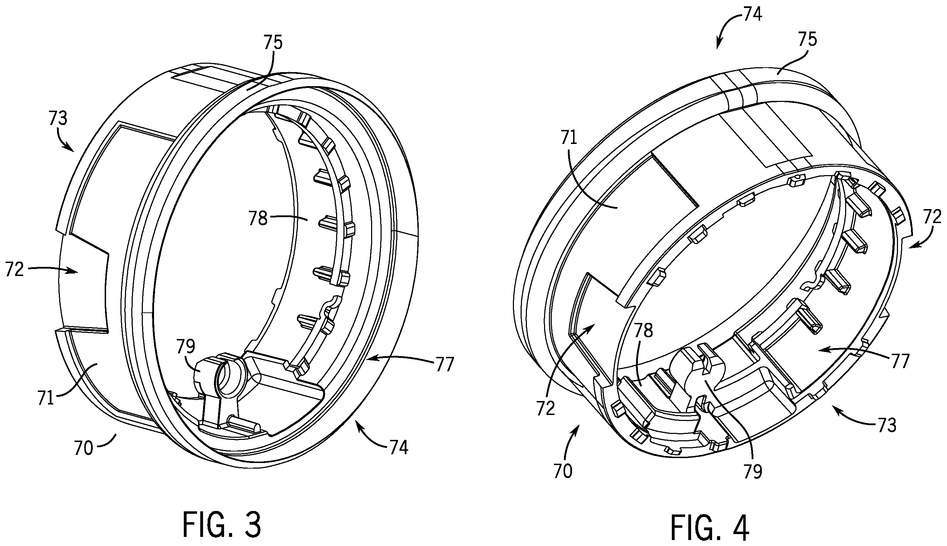

Figs. 3-4 are perspective views of the example dial frame 70 according to the present disclosure. The dial frame 70 has an outer perimeter surface 71 and a plurality of keyways 72 defined therein. Further, the dial frame 70 has a first end 73 oriented toward the frame 30 (Fig. 2) and an opposite second end 74. Additionally, a dial flange 75 is located at the second end 74, and extends radially outwardly from the outer perimeter surface 71. Further, the dial frame 70 defines an opening 77 that is at least partially defined by an inner perimeter surface 78. In this example, the inner perimeter surface 78 can include several surfaces which may or may not be contiguous with each other. Additionally, the dial frame 70 includes an arm 79 that extends radially inwards from the inner perimeter surface 78 into the opening 77. The arm 79 holds a magnet (not depicted) that may be part of the sensor assembly 304 (described with respect to Fig. 2).

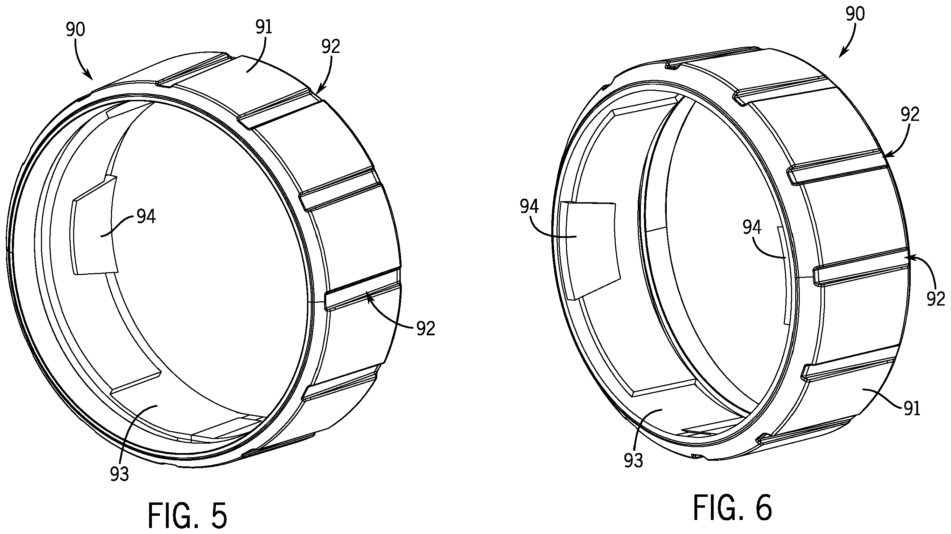

Figs. 5-6 are perspective views of the example trim tab movement selector 90 according to the present disclosure. The trim tab movement selector 90 has an outer perimeter surface 91 with a plurality of recesses 92 thereon. The recesses 92 may aid the operator in gripping and rotating the trim tab movement selector 90. Further, the trim tab movement selector 90 has an inner perimeter surface 93 that faces the outer perimeter surface 71 (described with respect to Figs. 3-4) of the dial frame 70. Additionally, the trim tab movement selector 90 has a plurality of keys 94 that extend radially inwards from the inner perimeter surface 93. The keys 94 are received into the keyways 72 of the dial frame 70, thereby rotatably fixing the trim tab movement selector 90 to the dial frame 70 (e.g., the dial frame 70 rotates with the trim tab movement selector 90).

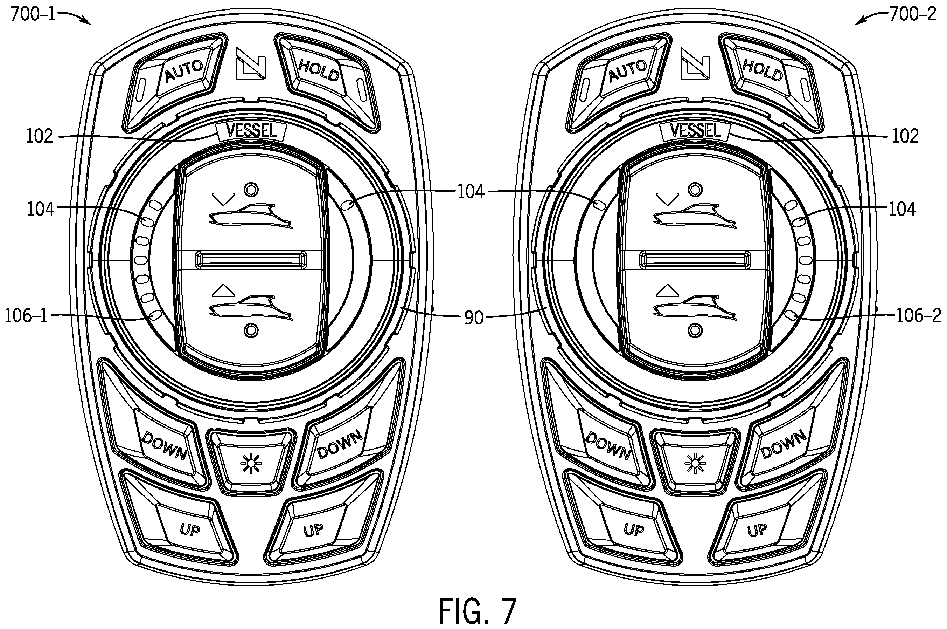

Fig. 7 is two top views 700-1, 700-2 of the example trim tab actuator input device 20 according to the present disclosure. The views 700-1, 700-2 include the perspective state indicator 102 and trim tab movement selector 90. Further, the views 700-1, 700-2 include the illuminated radially oriented tick marks 106-1, 106-2, respectively. As shown, the perspective state indicator 102 displays the word, "VESSEL," indicating that the trim tab actuator input device 20 is in a vessel perspective state. As such, the illuminated radially oriented tick marks 106-1, 106-2 may represent the direction of the roll of the marine vessel resulting from the movement of the actuators and/or trim tabs.

In the view 700-1, the illuminated radially oriented tick marks 106-1 are on the left (port) side of the trim tab display 104, which results from a counter-clockwise rotation of the trim tab movement selector 90, when the actuators and/or trim tabs are initially in a neutral position, and the trim tab actuator input device 20 is in the vessel perspective state. In this example, the counter-clockwise rotation causes an extension of the starboard side actuators and/or trim tabs, which may cause a roll towards the port side of the marine vessel. In the view 700-2, the illuminated radially oriented tick marks 106-2 are on the right (starboard) side of the trim tab display 104, which results from a clockwise rotation of the trim tab movement selector 90, when the actuators and/or trim tabs are initially in a neutral position, and the trim tab actuator input device 20 is in the vessel perspective state. In this example, the clockwise rotation may cause extension of the port side actuators and/or trim tabs, which may cause a roll towards the starboard side of the marine vessel. In these ways, the "VESSEL" perspective indicator 102 indicates that the illuminated radial tick marks 106-1, 106-2 of the trim tab display 104 may represent the roll of the marine vessel that ultimately results from the operation of the trim tab movement selector 90. Note that in both examples shown in FIG. 7, the given trim tab actuator has been fully extended, as indicated by the number of illuminated radially oriented tick marks 106-1, 106-2 in either case. However, it is possible to rotate the trim tab movement selector 90 to intermediate positions, which correspond to intermediate extension of the trim tab actuators, and which would be shown by illumination of a corresponding subset of the radially oriented tick marks 106-1, 106-2. Further, note that one tick mark is illuminated on the side opposite that to which the trim tab movement selector 90 was rotated in each case. This may indicate that the system is operational. In other examples, when the trim tab movement selector 90 is rotated in one direction, none of the tick marks on the side of the trim tab actuator input device 20 opposite the direction of rotation are illuminated.

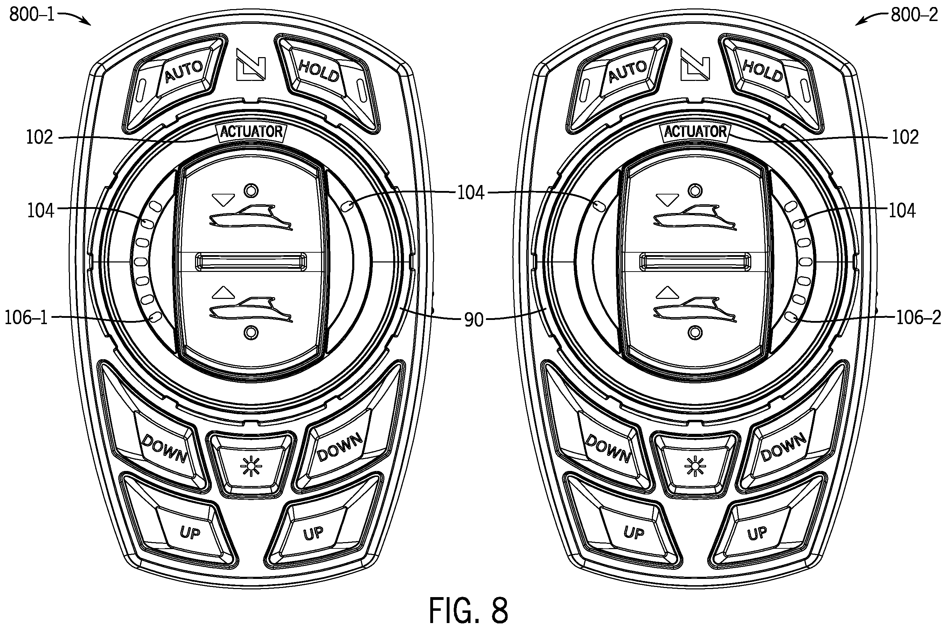

Fig. 8 is two top views 800-1, 800-2 of the example trim tab actuator input device 20 according to the present disclosure. The views 800-1, 800-2 include the perspective state indicator 102 and trim tab movement selector 90. Further, the views 800-1, 800-2 include the illuminated radially oriented tick marks 106-1, 106-2, respectively. As shown, the perspective state indicator 102 displays the word, "ACTUATOR," indicating that the trim tab actuator input device 20 is in an actuator perspective state. As such, the illuminated radially oriented tick marks 106-1, 106-2 may represent the side of the marine vessel on which the actuators and/or trim tabs are moving in response to operation of the trim tab movement selector 90.

In the view 800-1, the illuminated radially oriented tick marks 106-1 are on the left (port) side of the trim tab display 104, which results from a clockwise rotation of the trim tab movement selector 90, when the actuators and/or trim tabs are initially in a neutral position, and the trim tab actuator input device 20 is in the actuator perspective state. In this example, the clockwise rotation causes an extension of the port side actuators and/or trim tabs, as shown by the illuminated radially oriented tick marks 106-1, resulting in the vessel rolling to starboard. In the view 800-2, the illuminated radially oriented tick marks 106-2 are on the right (starboard) side of the trim tab display 104, which results from a counter-clockwise rotation of the trim tab movement selector 90, when the actuators and/or trim tabs are initially in a neutral position and the trim tab actuator input device 20 is in the actuator perspective state. In this example, the counter-clockwise rotation causes extension of the starboard side actuators and/or trim tabs, as shown by the illuminated radially oriented tick marks 106-2, resulting in the vessel rolling to port. In these ways, the "ACTUATOR" perspective indicator 102 indicates that the illuminated radially oriented tick marks 106-1, 106-2 of the trim tab display 104 may represent the side of the marine vessel on which the actuators and/or trim tabs are moving in response to operation of the trim tab movement selector 90.

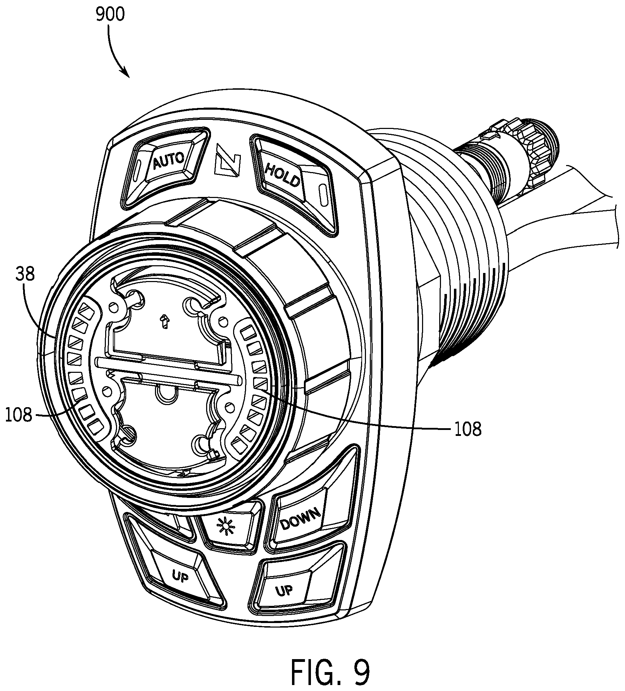

Fig. 9 is an internal perspective view 900 of the example trim tab actuator input device 20 according to the present disclosure. Further, the view 900 shows the trim tab actuator input device 20 with the button assembly 39 removed. Accordingly, this view reveals light tunnels 108, which are formed through opaque inserts supported on the button frame 38. The light tunnels 108 segregate the light emitted from each of the LEDs 110 that illuminate the radial tick marks of the trim tab display 104. As such, light from one or more illuminated LEDs does not illuminate any tick marks that are not intended to be illuminated.

Fig. 10 is an internal perspective view 1000 of the example trim tab actuator input device 20 according to the present disclosure. The view 1000 shows the trim tab actuator input device 20 with the button assembly 39 and button frame 38 removed. Accordingly, this view reveals the LEDs 110 on circuit board 301, which illuminate the radially oriented tick marks of the trim tab display 104.

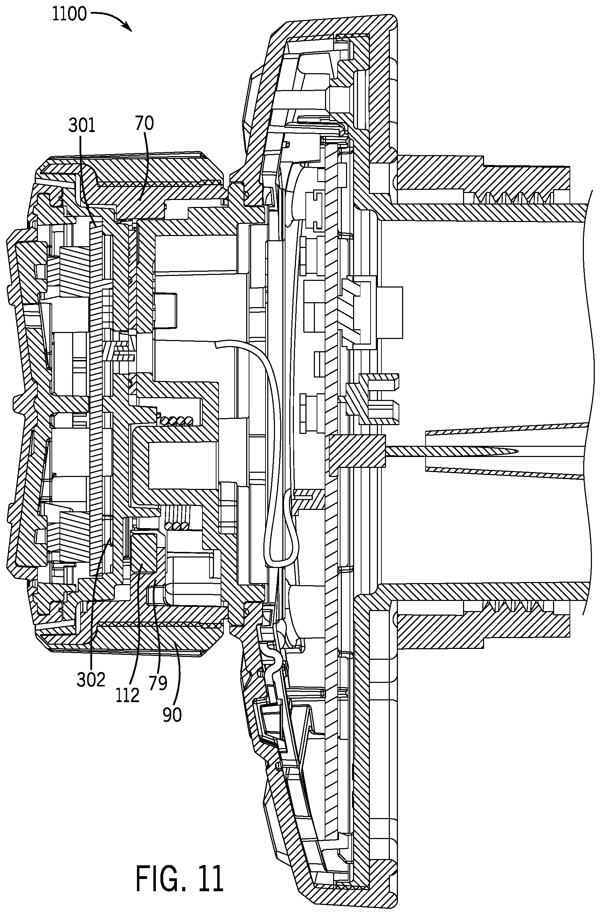

Fig. 11 is a cross-sectional side view 1100 of the example trim tab actuator input device 20 according to the present disclosure. The cross-sectional side view 1100 includes the trim tab movement selector 90, circuit board 301, sensor 302, and a magnet 112. As described with respect to Figs. 3-4, the magnet 112 is held in the arm 79 of the dial frame 70. As stated previously, the keys 94 (described with respect to Figs. 5-6) of the trim tab movement selector 90 are received into the keyways 72 of the dial frame 70, which rotatably fixes the trim tab movement selector 90 to the dial frame 70. As such, when the trim tab movement selector 90 rotates, the magnet 112 also rotates along with the arm 79 of the dial frame 70. Accordingly, the sensor 302 detects the rotation of the magnet 112, thereby determining the direction and magnitude of the rotation of the trim tab movement selector 90.

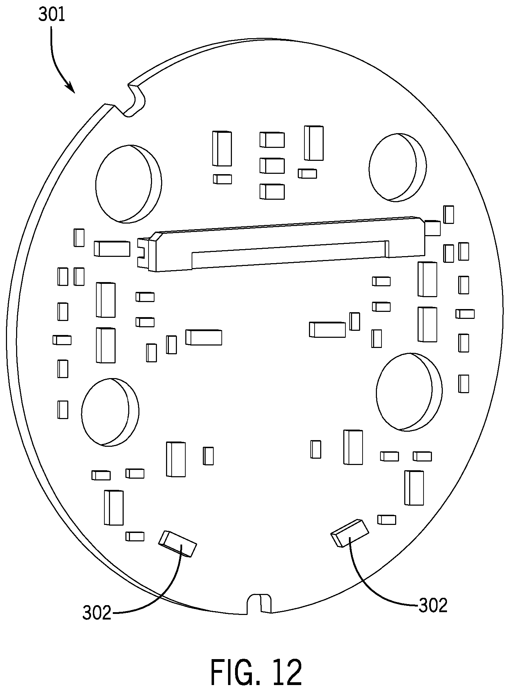

Fig. 12 is a perspective view of an example circuit board 301 according to the present disclosure. Note that Fig. 12 shows the opposite side of the circuit board 301 from that shown in Figs. 2 and 10 and thus the LEDs are not visible here. The example circuit board 301 includes sensors 302. In some embodiments of the present disclosure, the sensors 302 may be Hall-effect sensors, which can detect the strength of the magnetic field produced by the magnet 112. As the magnet 112 rotates with the dial frame 70 and trim tab movement selector 90, the sensors 302 can determine the direction and magnitude of this rotation, for example, as the magnetic field grows increasingly stronger as detected by one sensor 302 and increasingly weaker as detected by the other sensor 302. Subsequently, the sensors 302 may provide signals to the controller 300, indicating the direction and magnitude of the rotation to a circuit that identifies, based on the perspective state, direction of rotation and magnitude of rotation. Accordingly, the controller 300 may cause the actuators 304 to move based on the signals (for example, to retract or extend a rod into or out of the actuator housing in accordance with the magnitude and direction of rotation of the trim tab movement selector 90). In response, the actuators 304 may send signals (for example, signals generated by trim tab sensors sensing movement of the rod) to the trim tab actuator input device 20, indicating which LEDs to illuminate. In another example, the signals generated by the sensors 302 directly cause the controller 300 to illuminate the appropriate LEDs on the trim tab actuator input device 20, as opposed to requiring feedback from the actuators 304. The circuit that identifies, based on the perspective state, direction of rotation and magnitude of rotation, could be part of the control system 300 or could be a dedicated circuit located on the circuit board 301 or elsewhere in the trim tab control device 20, or otherwise on the marine vessel, such as under the helm. The perspective state can be stored in a memory that is part of a dedicated circuit, that is part of the control system 300, or elsewhere on the marine vessel. Although the sensors 302 are described here as being Hall-effect sensors, other sensors could be used, such as a potentiometer.

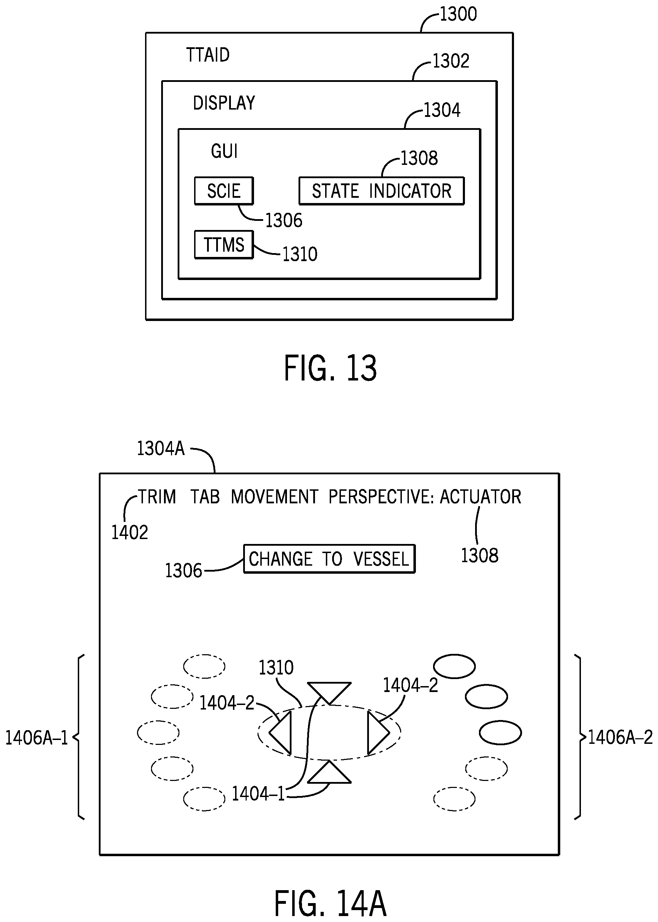

Fig. 13 is a diagram of an example trim tab actuator input device 1300 according to the present disclosure. The trim tab actuator input device 1300 may be similar to the trim tab actuator input device 20 described with respect to Fig. 1. However, instead of buttons and a dial, the trim tab actuator input device 1300 may include a display device 1302, with an interactive graphical user interface (GUI) 1304. The GUI 1304 may represent a multi-function display, within which the operate may engage specific elements to modify operation of the marine vessel. In some embodiments, the display device 1302 may be a touch screen device, with which the operator may engage to modify the trim of the marine vessel. In this example, the GUI 1304 includes a state-changing input element (SCIE) 1306, a state indicator 1308, and a trim tab movement selector (TTMS) 1310. The state-changing input element 1306 may be an interactive icon of the GUI 1304, with which the operator may engage to change the display perspective of the trim tab actuator input device 1300 from the actuator perspective state to the vessel perspective state, and vice-versa. The state indicator 1308 may be a display element, such as a non-editable field or icon, indicating that the perspective state is either an actuator perspective state or a vessel perspective state.

Fig. 14A is a diagram of an example graphical user interface 1304A for the example trim tab actuator input device 1300 according to the present disclosure. In this example, the GUI 1304A is similar to the GUI 1304, described with respect to Fig. 13, and includes a label 1402, "TRIM TAB MOVEMENT PERSPECTIVE:," for the state indicator 1308, "ACTUATOR." Additionally, the GUI 1304 includes a state-changing input element 1306. In this example, the state-changing input element 1306 is an interactive graphical button (indicated by the border), labeled, "CHANGE TO VESSEL." Accordingly, the operator may change the display perspective state of the trim tab actuator input device 20 by engaging with (e.g., touching) the area of the GUI 1304 enclosed by the border of the state change input element 1306. In such embodiments, touching the state-changing input element 1306 in this way may result in a change to the GUI 1304. More specifically, the trim tab actuator input device 20 may change the state indicator 1308 to, "VESSEL," and change the state-changing input element 1306 to display, "CHANGE TO ACTUATOR."

Additionally, the GUI 1304 includes arrows 1404-1, 1404-2, which may be interactive icons of the GUI 1304. The arrows 1404-1 may be similar to the arrows associated with the trim bow buttons 21 described with respect to Fig. 1. As such, in response to the operator engaging with the arrows 1404-1, the trim tab actuator input device 1300 may send a signal to the control system 300 indicating a request to trim up or trim down the bow of the marine vessel. The direction of the trim may be dependent on the direction the selected arrow is pointing.

Additionally, the GUI 1304 includes radially oriented tick marks 1406A-1, 1406A-2. In this example, because the display perspective is the actuator perspective state, the radially oriented tick marks 1406A-1 may represent the position of the port side actuators and/or trim tabs of the marine vessel. Conversely, the radially oriented tick marks 1406A-2 may represent the position of the starboard side actuators and/or trim tabs. The radially oriented tick marks 1406A-1, 1406A-2 include tick marks with solid and dotted lines. The solid lines represent illuminated tick marks, and the dotted lines represent tick marks that are not illuminated. As such, in this example, the radially oriented tick marks 1406A-1, 1406A-2 indicate that the starboard side actuators and/or trim tabs are partially extended (e.g., three fifths of full extension). However, if the trim tab actuator input device 20 were in the vessel perspective, the same illumination configuration of the radially oriented tick marks 1406A-1, 1406A-2 would indicate that the vessel is rolling towards the starboard direction.

The arrows 1404-2 may represent the trim tab movement selector 1310. As such, in response to the operator engaging the starboard (rightward) pointing arrow, the trim tab actuator input device 20 may respond in a similar way as to the clockwise rotation of the trim tab movement selector 90 described with respect to Fig. 1. Additionally, in response to the operator engaging the port (leftward) pointing arrow, the trim tab actuator input device 20 may respond in a similar way as to the counter-clockwise rotation of the trim tab movement selector 90. Thus, as the trim tab actuator input device 1300 is in the actuator perspective in this example, engagement of the port pointing arrow may result in illumination of additional radially oriented tick marks 1406-2 in a clockwise direction. Conversely, engagement of the starboard pointing arrow may result in de-illumination of the radially oriented tick marks 1406-2, and subsequent illumination of the radially oriented tick marks 1406-1 in the counter-clockwise direction.

However, as stated previously, the trim tab actuator input device 1300 may function differently if the display perspective were the vessel perspective state, wherein the radially oriented tick marks 1406A-1, 1406A-2 would represent the roll of the marine vessel resulting from selection of the trim tab movement selector 1310. As such, in the vessel perspective state, the current display of the radially oriented tick marks would represent a starboard roll of the marine vessel. Further, the operator engagement of the starboard pointing arrow may result in illumination of additional radially oriented tick marks 1406A-2 in a clockwise direction. Conversely, engagement of the port pointing arrow may result in de-illumination of the radially oriented tick marks 1406A-2, and subsequent illumination of the radially oriented tick marks 1406A-1 in the counter-clockwise direction.

In this example, the display 1302 is described as a touch screen input-output device. However, in some examples, the display may instead be an output device. In such examples, the trim tab actuator input device 1300 may include one or more input devices, such as a mouse, pen, keyboard, and the like. In these examples, the operator may use one or more of the input devices to make selections on the GUI 1304 described above with respect to screen engagement (or touches).

Further, it should be noted that the display 1302, including the GUI 1304, could be combined with the trim tab actuator input device 20 in various manners. For example, the GUI 1304 may include the label 1402, the state indicator 1308, and state-changing input element 1306, while operator inputs may made by rotating the trim tab movement selector 90 and the position of the trim tab and/or actuator in the actuator state (or the roll of the vessel in the vessel state) may be shown by the trim tab display 104 of the trim tab actuator 20. The operator may interact with the GUI 1304 to change the perspective state and may subsequently interact with the trim tab actuator 20 to effect movement of the trim tabs. The functionality described herein can be divided between the trim tab actuator input device 1300 and the trim tab actuator input device 20 in other ways, such as for example if the GUI 1304 includes only the ability to change the perspective state, while all other functionality is provided via the trim tab actuator input device 20.

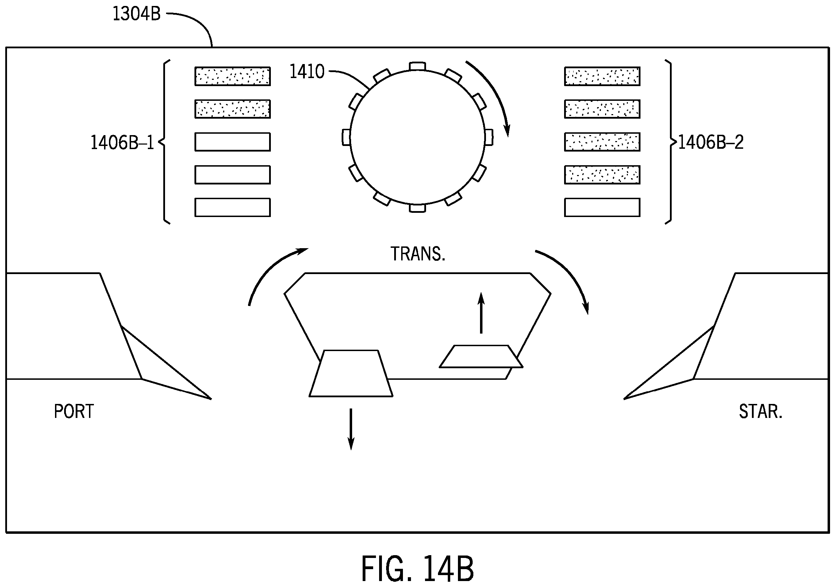

Fig. 14B is a diagram of an example graphical user interface 1304B for the example trim tab actuator input device 1300 according to the present disclosure. In this example, the GUI 1304B is similar to the GUI 1304, described with respect to Fig. 13. The GUI 1304B includes vertically-oriented tick marks 1406B-1, 1406B-2, which may be similar to the radially-oriented tick marks 1406A-1, 1406A-2, described with respect to Fig. 14A. As such, the vertically-oriented tick marks 1406B-1, 1406B-2 may represent the positions of the trim tab actuators 304. Additionally, the GUI 1304B includes trim tab movement selector 1410, which may be similar to the trim tab movement selector 90, described with respect to Figs. 1A, 2, 3, and 5-8. However, in contrast to the physical dial of trim tab movement selector 90, the trim tab movement selector 1410 may operate in response to a user engagement on a touch screen device. The clockwise-pointing arrow near the trim tab movement selector 1410 may represent the location and direction the operate may slide a touch engagement on a touch screen to extend a starboard side actuator in the actuator perspective state (or a port side actuator in the vessel perspective state). It is noted that the GUIs described herein are merely non-limiting examples. It is possible to represent the trim tab actuator positions, and associated functionality, in various manners consistent with the descriptions herein.

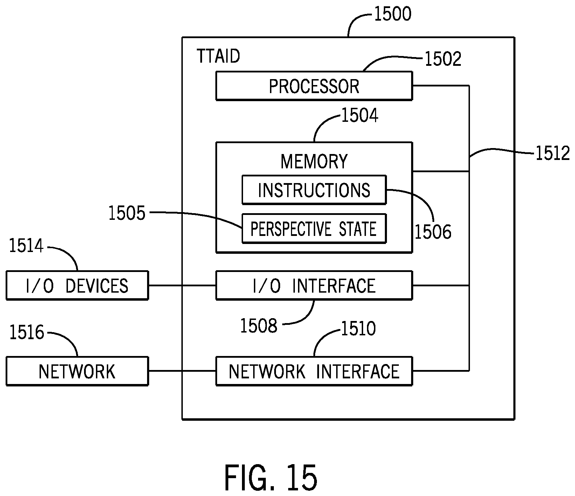

Fig. 15 is a diagram of an example trim tab actuator input device (TTAID) 1500 according to the present disclosure. The example trim tab actuator input device 1500 may display representations of actuator and/or trim tab movement of trim tabs on a marine vessel similar to the trim tab actuator input device 20 and trim tab actuator input device 1300 described with respect to Figs. 1, 7, 8, and 14. In this example, the trim tab actuator input device 1500 includes a processor 1502, memory 1504, input-output (I/O) interface 1508, and network interface 1510, which may be connected by an interconnect 1512. The processor 1502 may be a computer processing circuit (e.g., a central processing unit (CPU)) that retrieves and executes programming instructions 1506 stored in the memory 1504 to perform the functionality described herein. The interconnect 1512 may move data, such as programming instructions, between the processor 1502, memory 1504, I/O interface 1508, and network interface 1510. The interconnect 1512 may include one or more busses.

The memory 1504 may be a computer memory or storage device, including volatile memory, such as a random access memory (RAM) device (e.g., static RAM, dynamic RAM, and the like), non-volatile memory, such as a hard disk drive, solid state device (SSD), removable memory cards, optical storage, flash memory devices, and the like. In some examples, the memory 1504 may include volatile and non-volatile memory devices. The memory 1504 stores the perspective state 1505 and instructions 1506.

Additionally, the trim tab actuator input device 1500 may be in electronic communication with I/O devices 1514 through the I/O interface 1508, and with a network 1516 through the network interface 1510. The I/O devices 1514 may be similar to the buttons 21 and trim tab movement selector 90, described with respect to Fig. 1. Further, the I/O devices 1514 may be similar to the input and input-output devices described with respect to Figs. 7, 8, and 14. Accordingly, the operator may engage or otherwise manipulate the I/O devices 1514 in the manners described with respect to Figs. 1, 7, 8, and 14. The network 1516 may be an electronic communication network, such as a controller area network (CAN), for processing communications between the trim tab actuator input device 1500 and the control system 300, as described with respect to Figs. 1-14. In some examples, the network 1516 may be wired, wireless (e.g., wi-fi, Bluetooth, or cellular), or some other computer communication network.

In some embodiments, the trim tab actuator input device 1500 may be a server computer or similar device without a user interface but which receives requests from other computer systems having one or more user interfaces. Further, in some embodiments, the trim tab actuator input device 1500 may be a portable computer, laptop, tablet computer, pocket computer, telephone, smart phone, or the like.

A non-limiting list of examples is provided hereinafter to demonstrate some aspects of the present disclosure. Example 1 is a trim tab actuator input device for a marine vessel. This example can include a trim tab movement selector that, when selected for a first trim tab of the marine vessel, sends a first signal to a first actuator of the first trim tab of the marine vessel, wherein the first signal indicates a first position to which the first actuator is to move the first trim tab to effectuate a first roll movement of the marine vessel. Further, when selected for a second trim tab of the marine vessel, sends a second signal to a second actuator of the second trim tab of the marine vessel, wherein the second signal indicates a second position to which the second actuator is to move the second trim tab to effectuate a second roll movement of the marine vessel. Additionally, this example can include a state-changing input element, wherein selecting the state-changing input element when the trim tab actuator input device is in a first state, changes the trim tab actuator input device to be in a second state. Further, when the trim tab actuator input device is in the second state, selecting the state-changing input element changes the trim tab actuator input device to be in the first state. Additionally, this example includes a display. Further, when the trim tab actuator input device is in the first state, the display indicates the first position of the first trim tab and/or the second position of the second trim tab. Additionally, when the trim tab actuator input device is in the second state, the display indicates the first roll movement of the marine vessel and/or the second roll movement of the marine vessel.

Example 2 includes the device of example 1, including or excluding optional features. In this example, the trim tab movement selector comprises a rotating element, wherein rotating the rotating element in a clockwise direction sends the first signal to the first actuator of the first trim tab, and wherein rotating the rotating element in a counter-clockwise direction sends the second signal to the second actuator of the second trim tab.

Example 3 includes the device of example 2, including or excluding optional features. In this example, the rotating element comprises a dial.

Example 4 includes the device of example 2, including or excluding optional features. In this example, the display further comprises an indicator of whether the trim tab actuator input device is in a state selected from a group consisting of the first state and the second state.

Example 5 includes the device of example 2, including or excluding optional features. In this example, the display further comprises a plurality of radially oriented indicators, wherein when the trim tab actuator input device is in the second state, rotating the rotating element causes the display to illuminate the radially oriented indicators in accordance with a direction in which the rotating element is rotated, and wherein when the trim tab actuator input device is in the first state, rotating the rotating element causes the display to illuminate the radially oriented indicators in accordance with a direction opposite that in which the rotating element is rotated.

Example 6 includes the device of example 5, including or excluding optional features. In this example, the radially oriented indicators comprise a plurality of radially oriented tick marks and a plurality of light emitting diodes.

Example 7 includes the device of example 5, including or excluding optional features. In this example, rotating the rotating element in the opposite direction of the direction, after rotating the rotating element in the direction, causes the display to stop illuminating one or more illuminated, radially oriented indicators in accordance with the opposite direction and the magnitude to which the rotating element is rotated.

Example 8 includes the device of example 2, including or excluding optional features. In this example, the first position corresponds with a magnitude to which the rotating element is rotated in the clockwise direction, and the second position corresponds with a magnitude to which the rotating element is rotated in the counter-clockwise direction.

Example 9 includes the device of example 8, including or excluding optional features. In this example, the display comprises a plurality of radially oriented tick marks, wherein rotating the rotating element causes the display to illuminate the radially oriented tick marks in accordance with a direction in which the rotating element is rotated and the magnitude to which the rotating element is rotated.

Example 10 includes the device of example 1, including or excluding optional features. In this example, the trim tab actuator input device further comprises a plurality of keys, wherein the state-changing input element comprises the plurality of keys.

Example 11 includes the device of example 10, including or excluding optional features. In this example, selecting the state-changing input element comprises holding the plurality of keys for a predetermined amount of time.

Example 12 includes the device of example 1, including or excluding optional features. In this example, the display displays a graphical user interface (GUI), wherein the GUI comprises the state-changing input element.

Example 13 includes the device of example 12, including or excluding optional features. In this example, the GUI comprises an indicator of whether the trim tab actuator input device is in a state selected from a group consisting of the first state and the second state.

Example 14 includes the device of example 13, including or excluding optional features. In this example, the indicator comprises the term, trim tab, when the trim tab actuator input device is in the first state, and the word, boat, when the trim tab actuator input device is in the second state.

Example 15 includes the device of example 12, including or excluding optional features. In this example, the GUI comprises the trim tab movement selector.

Example 16 is a trim tab actuator input device for a marine vessel, comprising a trim tab movement selector that, when selected for a first trim tab of the marine vessel, sends a first signal to a first actuator of the first trim tab of the marine vessel, wherein the first signal indicates a first position to which the first actuator is to move the first trim tab to effectuate a first roll movement of the marine vessel. Additionally, when the trim tab movement selector is selected for a second trim tab of the marine vessel, sends a second signal to a second actuator of the second trim tab of the marine vessel, wherein the second signal indicates a second position to which the second actuator is to move the second trim tab to effectuate a second roll movement of the marine vessel. Additionally, the device includes a state-changing input element, wherein selecting the state-changing input element when the trim tab actuator input device is in a first state, changes the trim tab actuator input device to be in a second state. Further, when the trim tab actuator input device is in the second state, changes the trim tab actuator input device to be in the first state. Further, the trim tab actuator input device includes a display that indicates whether the trim tab actuator input device is in a state selected from a group consisting of the first state and the second state, wherein when the trim tab actuator input device is in the first state, the display indicates the first position of the first trim tab and/or the second position of the second trim tab, and wherein when the trim tab actuator input device is in the second state, the display indicates the first roll movement of the marine vessel and/or the second roll movement of the marine vessel.

Example 17 includes the device of example 16, including or excluding optional features. In this example, the trim tab movement selector comprises a rotating dial, and wherein rotating the rotating dial in a clockwise direction sends the first signal to the first actuator of the first trim tab, and wherein rotating the rotating dial in a counter-clockwise direction sends the second signal to the second actuator of the second trim tab.

Example 18 includes the device of example 16, including or excluding optional features. In this example, the trim tab actuator input device further comprises a plurality of keys, wherein the state-changing input element comprises the plurality of keys, and wherein selecting the state-changing input element comprises holding the plurality of keys for a predetermined amount of time.

Example 19 includes the device of example 16, including or excluding optional features. In this example, the display displays a graphical user interface (GUI), wherein the GUI comprises the state-changing input element, and wherein the GUI comprises an indicator of whether the trim tab actuator input device is in the state selected from the group consisting of the first state and the second state.

Example 20 includes the device of example 19, including or excluding optional features. In this example, the indicator comprises the term, actuator, when the trim tab actuator input device is in the first state, and the indicator comprises the word, vessel, when the trim tab actuator input device is in the second state.

## Claims

1. A trim tab actuator input device (20, 1300, 1500) for a marine vessel, comprising:
- a trim tab movement selector (90, 1310, 1410) that, when selected for:
a first trim tab of the marine vessel, sends a first signal to a first actuator (304) of the first trim tab of the marine vessel, wherein the first signal indicates a first position to which the first actuator (304) is to move the first trim tab to effectuate a first roll movement of the marine vessel, and
a second trim tab of the marine vessel, sends a second signal to a second actuator (304) of the second trim tab of the marine vessel, wherein the second signal indicates a second position to which the second actuator (304) is to move the second trim tab to effectuate a second roll movement of the marine vessel;
- a state-changing input element (22, 102, 1306), wherein selecting the state-changing input element (22, 102, 1306) when:
the trim tab actuator input device (20, 1300, 1500) is in a first state, changes the trim tab actuator input device (20, 1300, 1500) to be in a second state, and
the trim tab actuator input device (20, 1300, 1500) is in the second state, changes the trim tab actuator input device (20, 1300, 1500) to be in the first state; and
- a display (102, 104, 104-1, 104-2, 106-1, 106-2, 1302);
wherein when the trim tab actuator input device (20, 1300, 1500) is in the first state, the display (102, 104, 104-1, 104-2, 106-1, 106-2, 1302) indicates the first position of the first trim tab and/or the second position of the second trim tab, and wherein when the trim tab actuator input device (20, 1300, 1500) is in the second state, the display (102, 104, 104-1, 104-2, 106-1, 106-2, 1302) indicates the first roll movement of the marine vessel and/or the second roll movement of the marine vessel.

2. The trim tab actuator input device (20, 1300, 1500) of claim 1, wherein the trim tab movement selector (90, 1310, 1410) comprises a rotating element (90);
wherein rotating the rotating element (90) in a clockwise direction sends the first signal to the first actuator (304) of the first trim tab; and
wherein rotating the rotating element (90) in a counter-clockwise direction sends the second signal to the second actuator (304) of the second trim tab.

3. The trim tab actuator input device (20, 1300, 1500) of claim 2, wherein the rotating element (90) comprises a dial.

4. The trim tab actuator input device (20, 1300, 1500) of claim 2 or claim 3, wherein the display (102, 104, 104-1, 104-2, 106-1, 106-2, 1302) further comprises an indicator (102, 1308) of whether the trim tab actuator input device (20, 1300, 1500) is in a state selected from a group consisting of the first state and the second state.

5. The trim tab actuator input device (20, 1300, 1500) of any of claims 2 to 4, wherein the display (102, 104, 104-1, 104-2, 106-1, 106-2, 1302) further comprises a plurality of radially oriented indicators (104, 104-1, 104-2, 106-1, 106-2, 1406A-1, 1406A-2);
wherein when the trim tab actuator input device (20, 1300, 1500) is in the second state, rotating the rotating element (90) causes the display (102, 104, 104-1, 104-2, 106-1, 106-2, 1302) to illuminate the radially oriented indicators (104, 104-1, 104-2, 106-1, 106-2, 1406A-1, 1406A-2) in accordance with a direction in which the rotating element (90) is rotated; and
wherein when the trim tab actuator input device (20, 1300, 1500) is in the first state, rotating the rotating element (90) causes the display (102, 104, 104-1, 104-2, 106-1, 106-2, 1302) to illuminate the radially oriented indicators (104, 104-1, 104-2, 106-1, 106-2, 1406A-1, 1406A-2) in accordance with a direction opposite that in which the rotating element (90) is rotated.

6. The trim tab actuator input device (20, 1300, 1500) of claim 5, wherein the radially oriented indicators (104, 104-1, 104-2, 106-1, 106-2, 1406A-1, 1406A-2) comprise a plurality of radially oriented tick marks (104, 104-1, 104-2, 106-1, 106-2, 1406A-1, 1406A-2) and a plurality of light emitting diodes (110).

7. The trim tab actuator input device (20, 1300, 1500) of claim 5 or claim 6, wherein rotating the rotating element (90) in the opposite direction of the direction, after rotating the rotating element (90) in the direction, causes the display (102, 104, 104-1, 104-2, 106-1, 106-2, 1302) to stop illuminating one or more illuminated, radially oriented indicators 104, 104-1, 104-2, 106-1, 106-2, 1406A-1, 1406A-2) in accordance with the opposite direction and the magnitude to which the rotating element (90) is rotated.

8. The trim tab actuator device (20, 1300, 1500) of any of claims 2 to 7, wherein the first position corresponds with a magnitude to which the rotating element (90) is rotated in the clockwise direction, and the second position corresponds with a magnitude to which the rotating element (90) is rotated in the counter-clockwise direction.

9. The trim tab actuator input device (20, 1300, 1500) of claim 8, wherein the display (102, 104, 104-1, 104-2, 106-1, 106-2, 1302) comprises a plurality of radially oriented tick marks (104, 104-1, 104-2, 106-1, 106-2, 1406A-1, 1406A-2), wherein rotating the rotating element (90) causes the display (102, 104, 104-1, 104-2, 106-1, 106-2, 1302) to illuminate the radially oriented tick marks (104, 104-1, 104-2, 106-1, 106-2, 1406A-1, 1406A-2) in accordance with a direction in which the rotating element (90) is rotated and the magnitude to which the rotating element (90) is rotated.

10. The trim tab actuator input device (20, 1300, 1500) of any of claims 1 to 9, further comprising a plurality of keys (22, 102), wherein the state-changing input element (22, 102, 1306) comprises the plurality of keys.

11. The trim tab actuator input device (20, 1300, 1500) of claim 10, wherein selecting the state-changing input element (22, 102, 1306) comprises holding the plurality of keys (22, 102) for a predetermined amount of time.

12. The trim tab actuator input device (20, 1300, 1500) of any of claims 1 to 11, wherein the display (102, 104, 104-1, 104-2, 106-1, 106-2, 1302) displays a graphical user interface (GUI) (1304, 1304A, 1304B), and wherein the GUI (1304, 1304A, 1304B) comprises the state-changing input element.

13. The trim tab actuator input device (20, 1300, 1500) of claim 12, wherein the GUI (1304, 1304A, 1304B) comprises an indicator (102, 1308) of whether the trim tab actuator input device (20, 1300, 1500) is in a state selected from a group consisting of the first state and the second state.

14. The trim tab actuator input device (20, 1300, 1500) of claim 13, wherein the indicator (102, 1308) comprises:
the term, trim tab, when the trim tab actuator input device (20, 1300, 1500) is in the first state; and
the word, boat, when the trim tab actuator input device (20, 1300, 1500) is in the second state.

15. The trim tab actuator input device (20, 1300, 1500) of any of claims 12 to 14, wherein the GUI (1304, 1304A, 1304B) comprises the trim tab movement selector.
